# EUROPÄISCHE PATENTANMELDUNG

(11) **EP 2 722 224 A1**
(43) Veröffentlichungstag der Anmeldung: **23.04.2014**
(21) Anmeldenummer: 12007232.7
(22) Anmeldetag: 19.10.2012
(51) Int. Cl.: B60N 2/427, B60R 21/38

(54) **Sicherheitssystem für ein Fahrzeug**

(71) Anmelder: Metalsa Automotive GmbH, 51702 Bergneustadt (DE)
(72) Erfinder: Kern, Alexander, 51597 Morsbach (DE)

(57) **Zusammenfassung**

Die Erfindung betrifft Sicherheitssystem (1) für ein Fahrzeug, mit einem Antrieb (10) zur Einwirkung auf eine Fahrzeugkomponente. Um ein Sicherheitssystem mit einem kompakten und leistungsstarken Antrieb bereitzustellen, ist erfindungsgemäß vorgesehen, dass der Antrieb (10) einen pyrotechnischen Gasgenerator (11), sowie einen Wellbalg (12) umfasst, wobei durch Druckbeaufschlagung mittels des Gasgenerators (11) eine Expansion des Wellbalgs (12) auslösbar ist.

## Beschreibung

Die Erfindung betrifft ein Sicherheitssystem für ein Fahrzeug sowie einen Antrieb hierfür.

Im Fahrzeugbau, insbesondere im Kfz-Bereich, sind verschiedene Sicherheitssysteme bekannt, bei denen im Falle eines Unfalls oder einer Gefahrensituation ein Antrieb auf eine Fahrzeugkomponente einwirkt, um die Sicherheit für die Fahrzeuginsassen zu erhöhen. Hierunter fallen z. B. Gurtstraffer oder Systeme, die Einstellung oder Position eines Fahrzeugsitzes verändern. im Hinblick auf die zunehmenden Sicherheitsanforderungen und die hiermit einhergehend entwickelten Konzepte sind eine Vielzahl weiterer Sicherheitssysteme entwickelt worden, von denen typischerweise jedes einzelne über einen eigenen Antrieb verfügt.

Ein solcher Antrieb muss verschiedenen Anforderungen gerecht werden. Dies ist zum einen selbstverständlich eine hohe Zuverlässigkeit, daneben aber auch ein schnelles Ansprechverhalten sowie eine ausreichend hohe Leistung, um innerhalb von Sekundenbruchteilen, typischerweise innerhalb weniger Millisekunden, große Mengen an Antriebsenergie freizusetzen. Dies beinhaltet normalerweise das Aufbringen starker Kräfte bzw. hoher Drehmomente, wobei z. B. eine Fahrzeugkomponente innerhalb der oben genannten Zeiträume um einige Zentimeter verlagert werden muss.

Hierzu sind im Stand der Technik insbesondere elektrisch, hydraulisch oder pneumatisch arbeitende Antriebe bekannt. Derartige Antriebe haben den Vorteil, dass sich hiermit eine Einwirkung auf eine Fahrzeugkomponente im Allgemeinen gut kontrollieren lässt, bedingen aber unter Umständen einen relativ hohen Installationsaufwand und lassen sich nur schwer kompakt realisieren, wenn eine hohe Antriebsleistung bzw. schnelle Auslösung erreicht werden soll. daneben sind, z. B. für Airbags, pyrotechnische Antriebe bekannt, die es erlauben, bei geringer Baugröße großer Energiemengen zu speichern, die im Bedarfsfall innerhalb von wenigen Millisekunden freigesetzt werden können. Auch ist es hiermit möglich, hohe Kräfte bzw. Drehmomente zu erzeugen. Soll nicht, wie im Falle eines Airbags, ein bloßes Aufblasen erreicht werden, sondern die Energie als Antrieb für eine gerichtete Bewegung genutzt werden, so werden derartige pyrotechnische Antriebe, ebenso wie auch hydraulische oder pneumatische Bauformen, in Verbindung mit einem System aus Zylinder und Kolben eingesetzt. Durch die Auslösung des Antriebs wird der Kolben mit Gasdruck beaufschlagt und dadurch innerhalb des Zylinders in Bewegung gesetzt. Trotz der Leistungsfähigkeit dieser Systeme ist hier eine kompakte Bauweise kaum möglich, da der Zylinder mindestens die Länge eines vorgesehenen Hubes des Kolbens haben muss.

Vor diesem Hintergrund ist es Aufgabe der vorliegenden Erfindung, ein Sicherheitssystem mit einem kompakten und leistungsstarken Antrieb bereitzustellen.

Die Aufgabe wird erfindungsgemäß gelöst durch ein Sicherheitssystem nach Anspruch 1 sowie durch einen Antrieb nach Anspruch 13.

Durch die Erfindung wird zum einen ein Sicherheitssystem für ein Fahrzeug zur Verfügung gestellt. Hierbei bezeichnet "Sicherheitssystem" ein System, bei dem in einer Notfallsituation (also bei einem Unfall oder in einer Gefahrensituation) ein Antrieb auf eine Fahrzeugkomponente einwirkt, um die Sicherheit für die Fahrzeuginsassen zu erhöhen. Als Fahrzeuge kommen in diesem Zusammenhang insbesondere Kraftfahrzeuge wie Pkw oder Lkw infrage.

Das Sicherheitssystem ist mit einem Antrieb versehen. Wie im Stand der Technik bekannt, dient dieser Antrieb dazu, auf die genannte Fahrzeugkomponente einzuwirken. Die Einwirkung kann hierbei insbesondere in einer Verschiebung der Fahrzeugkomponente (worunter sämtliche Lageveränderungen des Schwerpunkts fallen) oder in einer Drehung (z. B. einen Kippen) derselben bestehen. Daneben ist aber grundsätzlich auch denkbar, dass eine Fahrzeugkomponente mittels des Antriebes verformt wird. In jedem Fall dient der Antrieb dazu, die Fahrzeugkomponente mit einer Kraft bzw. mit einem Drehmoment zu beaufschlagen.

Erfindungsgemäß umfasst der Antrieb einen pyrotechnischen Gasgenerator sowie einen Wellbalg, wobei durch Druckbeaufschlagung mittels des Gasgenerators eine Expansion des Wellbalgs auslösbar ist. Im Allgemeinen bezeichnet "pyrotechnischer Gasgenerator" hierbei jede Vorrichtung, in der gezielt eine chemische Reaktion auslösbar ist, die zur Gasentwicklung führt, typischerweise in Form einer Explosion oder eines gezielten Abbrands. In Kombination hiermit können auch Kartuschen mit vorgespanntem Gas verwendet werden, bei denen z. B. ein pyrotechnischer Gasgenerator eine Berstscheibe zerstört und damit den Zustrom von Gas aus der Kartusche zur Antriebseinheit freigibt. Derartige Vorrichtungen sind auch als Hybridgasgeneratoren bekannt. Bei der chemischen Reaktion, die der Funktion des pyrotechnischen Gasgenerators zugrunde liegt, wird extrem schnell Energie freigesetzt und steht für den Antrieb zur Verfügung, was insbesondere bei Unfällen einen entscheidenden Sicherheitsvorteil bedeutet. Wie bereits oben erwähnt, erlauben derartige Gasgeneratoren eine kompakte Bauweise bei hoher Leistungsfähigkeit.

Der erfindungsgemäß eingesetzte Wellbalg dient dazu, den vom Gasgenerator erzeugten Druck zur Erzeugung einer gerichteten Bewegung zu nutzen. Wie im Stand der Technik bekannt, kann ein solcher Wellbalg ziehharmonikaartig komprimiert bzw. expandiert werden. D. h. durch die Faltung des Wellbalgs ist eine Expansionsrichtung vorgegeben. Diese entspricht normalerweise einer geradlinigen Bewegung der Stirnseiten des Wellbalgs zueinander. Erfindungsgemäß ist durch Druckbeaufschlagung mittels des Gasgenerators eine Expansion des Wellbalgs auslösbar. Der Wellbalg wird also mittels des Gasgenerators innenseitig mit Druck beaufschlagt. Um dies zu gewährleisten, ist der Wellbalg gegen größere Druckverluste gesichert, d. h. es sind allenfalls kleinere Öffnungen zwischen seinem Inneren und der Umgebung vorhanden. Im Ruhezustand ist der Wellbalg hierbei typischerweise (nahezu) vollständig komprimiert. Er hat in diesem Fall die größte Kompaktheit und beim Auslösen des Antriebs steht ein maximaler Hubweg zur Verfügung. Es ist allerdings auch möglich, dass der Wellbalg bereits in der Ruheposition teilweise expandiert ist. Um den sehr hohen Gasdrücken standzuhalten, die vom pyrotechnischen Gasgenerator freigesetzt werden können, muss der Wellbalg eine ausreichende Stabilität aufweisen. Dies kann z. B. dadurch erreicht werden, dass er aus Metallblech gefertigt ist. Insbesondere können mehrlagige Metallbleche verwendet werden, wodurch sich Spannungen in den Randzonen reduzieren lassen. Daneben können aber gegebenenfalls auch z. B. (verstärkte) Kunststoffe oder Gummi sowie Verbundmaterialien eingesetzt werden. Der Wellbalg kann insbesondere zylinderähnlich, also mit rundem Querschnitt ausgebildet sein, daneben ist aber auch z. B. ein elliptischer Querschnitt denkbar. Es ist prinzipiell auch vorstellbar, dass der Wellbalg asymmetrisch ausgebildet ist, wobei auf einer Seite eine stärkere Expansion ermöglicht wird als auf der gegenüberliegenden Seite, so dass die Expansion nicht geradlinig, sondern entlang einer Kurve erfolgt.

Es hat sich herausgestellt, dass mittels eines derartigen Wellbalgs eine zuverlässige Umsetzung der Gasexpansion in eine gerichtete Bewegung möglich ist, ähnlich wie dies im Stand der Technik mit System aus Zylinder und Kolben geschieht. Allerdings erlaubt der Einsatz eines Wellbalgs ist eine kompaktere Bauweise. Dies liegt daran, dass zum einen der Maximalhub des Kolbens niemals größer als die Länge des Zylinders sein kann, zum anderen die Länge des Gesamtsystems immer mindestens der des Zylinders entspricht. Demgegenüber kann ein Wellbalg leicht auf ein Mehrfaches (z. B. Drei- bis Vierfaches) seiner Länge in komprimiertem Zustand (der z. B. einer Ruheposition des Systems entsprechen kann) expandiert werden. Des Weiteren vereinfacht sich die Konstruktion, da die Expansion hier mittels eines einzelnen Bauteils realisierbar ist, was gegebenenfalls auch zu einer Gewichtsersparnis führt. Es entfallen hier auch die bei Zylinder und Kolben bestehenden Anforderungen, den Kolben innerhalb des Zylinders zuverlässig und möglichst gasdicht zu führen.

Darüber hinaus kann der Antrieb ggf. auch Getriebekomponenten, Mittel zur Kraftübertragung usw. umfassen. Es können auch noch weitere Komponenten Teil des Sicherheitssystems sein, z. B. Sensoren, Steuerkomponenten oder eine Stromversorgung.

Die Kompaktheit des Antriebs lässt sich nochmals wesentlich verbessern, wenn der pyrotechnische Gasgenerator wenigstens teilweise innerhalb des Wellbalgs angeordnet ist. Konstruktionsbedingt weist auch ein vollständig komprimierter Wellbalg in seinem Inneren einen gewissen Hohlraum auf, der genutzt werden kann, um den Gasgenerator teilweise oder insbesondere auch vollständig aufzunehmen. Hierbei kann der Gasgenerator im Ruhezustand des Systems z. B. wenigstens 50 % des Innenvolumens des Wellbalgs einnehmen. Auch höhere oder niedrigere Anteile sind möglich, wobei sich in jedem Fall eine gute Raumausnutzung und eine hiermit verbundene Kompaktheit des gesamten Antriebs ergeben. Gleichzeitig bildet hierbei der Wellbalg ggf. einen Schutz für den darin angeordneten Gasgenerator. Die genannte Anordnung des Gasgenerators ist hierbei wenigstens im Ruhezustand gegeben, allerdings gilt dies normalerweise auch für den aktivierten Zustand, da sich in der Regel der Wellbalg nicht als Ganzes gegenüber dem Gasgenerator verschiebt.

Des Weiteren ist es bevorzugt, dass der Gasgenerator an einem Halteelement an einer Stirnseite des Wellbalgs angeordnet ist. Ein derartiges Halteelement ist primär durch seine Funktionen definiert, den Gasgenerator zu halten. Es weist hierbei in der Regel eine gegenüber dem Wellbalg erhöhte Steifigkeit auf und kann hierbei z. B. aus einem dickeren Metallblech oder Kunststoff gebildet sein. Denkbar ist insbesondere, dass der Gasgenerator lösbar mit dem Halteelement verbunden ist, um gegebenenfalls einen Austausch des Gasgenerators zu erleichtern. Als Stirnseiten gelten hierbei die Seiten des Wellbalgs, die entlang seiner Expansionsrichtung an den jeweiligen Enden liegen. Die genannte Stirnseite des Wellbalgs kann auch durch das Halteelement bzw. den Gasgenerator (im Wesentlichen) gasdicht abgeschlossen sein. Die gegenüberliegende Stirnseite kann in jedem Fall dadurch abgeschlossen sein, dass der Wellbalg dort (wenigstens indirekt) mit der Fahrzeugkomponente verbunden ist, auf die der Antrieb einwirkt.

Im Normalbetrieb des Fahrzeuges ist es wünschenswert, dass sich die Fahrzeugkomponente, auf die der Antrieb in einer Notfallsituation einwirkt, sich nicht unkontrolliert bewegen kann. Es sind hierbei Ausführungsformen denkbar, in denen der Antrieb bzw. die Fahrzeugkomponente selbst z. B. aufgrund eines inneren Reibungswiderstandes derartige Bewegungen verhindert (solange der Antrieb nicht aktiviert wird). Vorteilhaft umfasst das Sicherheitssystem allerdings ein Arretierungselement zur wenigstens teilweisen Lagesicherung des Antriebs und/oder der Fahrzeugkomponente. Das Arretierungselement kann hierbei z. B. auf den Antrieb selbst oder auf die zu bewegend Fahrzeugkomponente wirken. Die Lage des jeweiligen Elements wird durch das Arretierungselement entweder völlig oder innerhalb gewisser Grenzen festgelegt. Ein solches Arretierungselement ist hierbei lösbar ausgebildet, d. h. es kann entriegelt werden. Die Verriegelung kann hierbei insbesondere durch eine formschlüssige Verbindung erreicht werden, bei der z. B. einen zapfenförmiges Element auf Seiten der zu bewegenden Fahrzeugkomponente in eine entsprechende fahrzeugseitige Ausnehmung eingreift oder umgekehrt.

Bei Vorhandensein eines Arretierungselements ist es notwendig, dass dieses zuverlässig entriegelt wird, wenn der Antrieb aktiviert wird. Dies kann zum einen über eine übergeordnete Steuerung, die auch den Antrieb auslöst, geschehen. Es ist allerdings bevorzugt, dass das Arretierungselement durch Einwirkung des Antriebs lösbar ist. In diesem Fall wirkt der Antrieb, der auf die Fahrzeugkomponente einwirkt, direkt oder indirekt derart auf das Arretierungselement ein, dass dieses gelöst bzw. entriegelt wird. Der Antrieb wirkt hierbei bevorzugt rein mechanisch auf das Arretierungselement ein. Auf diese Weise kann eine Fehlfunktion des Arretierungselements weitgehend ausgeschlossen werden. Darüber hinaus lässt sich hierdurch mit einfachen Mitteln der Entriegelungsvorgang zeitlich auf den eigentlichen Arbeitsvorgang des Antriebs (z. B. ein Verschieben einer Fahrzeugkomponente) abstimmen.

Bevorzugt umfasst das Sicherheitssystem hierbei ein Paar von Schrägen, durch welche das Arretierungselement durch den Antrieb kraftbeaufschlagbar ist, um das Arretierungselement quer zu einer Expansionsrichtung des Wellbalgs zu verschieben. Durch die genannten Schrägen wird die durch den Antrieb vermittelte Kraft quer zur Expansionsrichtung umgelenkt und kann so dazu genutzt werden, eine formschlüssige Verbindung zu lösen. Die beiden genannten Schrägen gleiten hierbei aneinander entlang. Die ausgelöste Verschiebung muss hierbei nicht in einem Winkel von 90° zur Expansionsrichtung erfolgen, sie hat aber in jedem Fall eine Komponente senkrecht zur Expansionsrichtung. Selbstverständlich kann wenigstens eines der Bauteile, an denen eine der Schrägen angeordnet ist, aus einem Material gefertigt sein, das die Reibung herabsetzt.

Bei Vorhandensein des oben genannten Halteelements ist es bevorzugt, dass eine der Schrägen an dem Haltelement ausgebildet ist. Wie bereits geschildert, ist das Halteelement bevorzugt stabil ausgestaltet und kann somit gut die Gegenkräfte aufnehmen, die bei der Verschiebung des Arretierungselements auftreten. Bei dieser Ausgestaltung ist es insbesondere möglich, dass bei einer Aktivierung des Antriebs der Wellbalg zunächst expandiert, indem diejenige Stirnseite mit dem Halteelement in eine Richtung verschoben wird, um das Arretierungselement zu lösen. Die weitere Expansion erfolgt dann in der entgegengesetzten Richtung an der gegenüberliegenden Stirnseite, mit der der Wellbalg direkt oder indirekt auf die Fahrzeugkomponente einwirkt. Dies entspricht dann der eigentlichen Arbeitsbewegung des Antriebs.

Das Sicherheitssystem kann eingesetzt werden, um auf verschiedenste Fahrzeugkomponenten einzuwirken, z. B. ein Lenkrad, einen Überrollbügel, ein Stoßfänger usw. Besonders bevorzugt ist die Fahrzeugkomponente ein Fahrzeugsitz, eine Fahrzeugsitzschiene und/oder eine Komponente hiervon. Hierbei kann der Antrieb insbesondere dazu vorgesehen sein, die Fahrzeugkomponente anzuheben, horizontal zu verschieben und / oder zu kippen. Das Kippen kann hierbei insbesondere um eine Achse parallel zur Längsachse oder zur Querachse des Fahrzeugs erfolgen. Als Fahrzeugsitzschiene kommt hierbei sowohl eine am Boden des Fahrzeugs angeordnete Bodenschiene als auch einer am Fahrzeugsitz angeordnete Sitzschiene infrage. Wie bekannt, werden derartige Schienenpaare aus Bodenschiene und Sitzschiene verwendet, um Verschiebbarkeit eines Fahrzeugsitzes in Längsrichtung zu ermöglichen. Eine Einwirkung des Antriebs auf Sitzschiene oder Bodenschiene bedingt normalerweise auch eine Einwirkung auf den Fahrzeugsitz selbst. Der erfindungsgemäße Antrieb ist hierbei auch bei kompakter Bauform leistungsfähig genug, um beispielsweise einen Fahrzeugsitz bzw. eine Fahrzeugsitzschiene mit dem darauf befindlichen Fahrzeugsitz auch dann zu verschieben oder anzuheben, wenn sich ein Insasse darauf befindet. Auch wenn Letzterer innerhalb der kurzen Zeiträume, in denen der Antrieb einwirkt, eventuell nicht selber beschleunigt wird, so wirkt doch in der Regel ein Kräftepaar zwischen Fahrzeugsitz und Insasse, so dass sich die vom Antrieb aufzubringenden Leistungen erhöht. Eine Komponente eines Fahrzeugsitzes kann in diesem Zusammenhang insbesondere eine Rückenlehne, eine Armlehne oder eine Kopfstütze sein.

Nachdem der Antrieb seinen maximalen Arbeitsweg erreicht hat, ist es denkbar, eine erneute Verriegelung des Antriebs und / oder der Fahrzeugkomponente vorzusehen. Es kann aber auch explizit vorgesehen sein, dass sich die Fahrzeugkomponente wieder zurück bewegen kann. Dies kann insbesondere bei einem Fahrzeugsitz bzw. einer Komponente desselben sinnvoll sein, da hierdurch einer bei einem Unfall auf den Insassen wirkenden Beschleunigungskraft nachgegeben werden kann. Durch diese Maßnahme kann ein Verletzungsrisiko für den Insassen weiter reduziert werden. Normalerweise sollte eine solche Rückbewegung allerdings nicht unkontrolliert, sondern gebremst stattfinden. Aus diesem Grund umfasst das Sicherheitssystem vorzugsweise wenigstens ein Dämpfungselement zur Dämpfung einer Rückbewegung, die einer Antriebsbewegung entgegengesetzt ist. Eine gewisse Dämpfung kann durch den Wellbalg selber erreicht werden, wenn dieser bei der Bewegung komprimiert wird, was zu einer Kompression sowie zu Reibungsverlusten innerhalb des im Wellbalg befindlichen Gases führt. Eine Dämpfung kann allerdings auch z. B. durch Festkörperreibung oder durch eine Wirbelstrombremse erfolgen. Besonders bevorzugt wird die Dämpfung durch elastische und/oder unelastische Verformungen des Dämpfungselements erreicht. Dieses kann z. B. aus Aluminiumsschaum bestehen, welcher bei einer Verformung hohe Energiemengen aufnehmen kann.

Bei bestimmten Ausführungsformen, insbesondere dann, wenn das Dämpfungselement mittels einer Form von Reibung wirkt, kann es vorteilhaft sein, wenn das Dämpfungselement erst zu einem bestimmten Zeitpunkt in vollem Umfang wirkt, wodurch verhindert werden kann, dass es zu einer unerwünschten Beeinträchtigung der Antriebsbewegung kommt. Daneben sind auch Ausführungsform denkbar, bei denen diejenige Lage des wenigstens einen Dämpfungselements, in der es eine optimale Wirkung entfaltet, einer kompakten Bauweise des Sicherheitssystems zuwiderläuft. In diesen Fällen kann es sinnvoll sein, dass eine entsprechende Lageveränderung des Dämpfungselements erst in einer Notfallsituation ausgelöst wird. In diesem Zusammenhang werden die genannten Maßnahmen sowie jede andere Veränderung des wenigstens einen Dämpfungselements, durch die sich die dämpfende Wirkung desselben verstärkt (z. B. im Hinblick auf Dämpfungsweg oder -stärke), als "Aktivierung" bezeichnet.

Besonders bevorzugt ist es hierbei, dass das wenigstens eine Dämpfungselement durch Einwirkung des Antriebs aktivierbar ist. In diesem Fall entfällt wiederum eine übergeordnete Steuerung zur Aktivierung des Dämpfungselements, die einen zusätzlichen Installationsaufwand sowie gegebenenfalls eine höhere Fehleranfälligkeit mit sich bringen würde. Bei dieser Ausführungsform wird durch die Aktivierung des Antriebs (mit zeitlicher Verzögerung) die Aktivierung des Dämpfungselements ausgelöst. Die Aktivierung erfolgt in diesem Zusammenhang bevorzugt rein mechanisch.

In einer bevorzugten Ausgestaltung der Erfindung ist zur Aktivierung die Anordnung zweier Dämpfungselemente relativ zueinander veränderbar, um eine Wegstrecke zu vergrößern, entlang der eine Dämpfung gegeben ist. Dies kann insbesondere bedeuten, dass zwei Dämpfungselemente (z. B. Aluminium-Schaumdämpfer) in Bezug auf die Bewegungsrichtung einer zu verschiebenden Fahrzeugkomponente zunächst nebeneinander angeordnet sind, wobei durch die Aktivierung wenigstens eines der Dämpfungselemente so verlagert wird, dass danach die beiden Elemente im Bezug auf die genannte Bewegungsrichtung hintereinander liegen. Auf diese Weise ergibt sich bei der Rückbewegung der Fahrzeugkomponente eine längere Strecke, entlang der eine Dämpfung eintritt. Gleichzeitig kann die anfängliche Anordnung der Dämpfungselemente nebeneinander z. B. eine geringere Bauhöhe ermöglichen.

Auch dann, wenn keine Verriegelung des Antriebs und/oder der Fahrzeugkomponente vorgesehen ist, wenn der Antrieb seinen maximalen Arbeitsweg erreicht hat, ist es in der Regel sinnvoll, zumindest eine Form von Begrenzung in dieser Hinsicht vorzusehen. Daher umfasst das Sicherheitssystem bevorzugt ein Anschlagelement zur Festlegung eines Bewegungsumfangs des Antriebs und / oder der Fahrzeugkomponente. Besonders bevorzugt ist dieses Anschlagelement verstellbar ausgebildet. Eine solche Verstellbarkeit kann, wie mit Bezug auf das Ausführungsbeispiel noch dargestellt wird, erreicht werden, wenn das Anschlagselement aus zwei teleskopartig ineinander angeordneten Teilelementen besteht, die mittels eines Gewindes gegeneinander verstellbar sind, wobei eines der Elemente den eigentlichen Anschlag bildet.

Durch die Erfindung wird des Weiteren ein Antrieb für ein erfindungsgemäßes Sicherheitssystem bereitgestellt. Dieser umfasst einen pyrotechnischen Gasgenerator sowie einen Wellbalg, wobei durch Druckbeaufschlagung mittels des Gasgenerators eine Expansion des Wellbalgs auslösbar ist. Der Antrieb kann, wie bereits erwähnt wurde, auch Getriebekomponenten usw. umfassen oder zur Verbindung mit diesen vorgesehen sein.

Details der Erfindungen werden im Folgenden anhand eines Ausführungsbeispiels mit Bezug auf die Figuren erläutert. Hierbei zeigt
- Fig.1a: eine perspektivische Darstellung einer Ausführungsform eines erfindungsgemäßen Sicherheitssystems in einer Ruheposition;
- Fig.1b: eine perspektivische Darstellung des Sicherheitssystems aus Fig.1a in einer aktivierten Position;
- Fig.2a: eine Schnittdarstellung entsprechend der Ruheposition in Fig.1a; sowie
- Fig.2b: eine Schnittdarstellung entsprechend der aktivierten Position in Fig.1b.

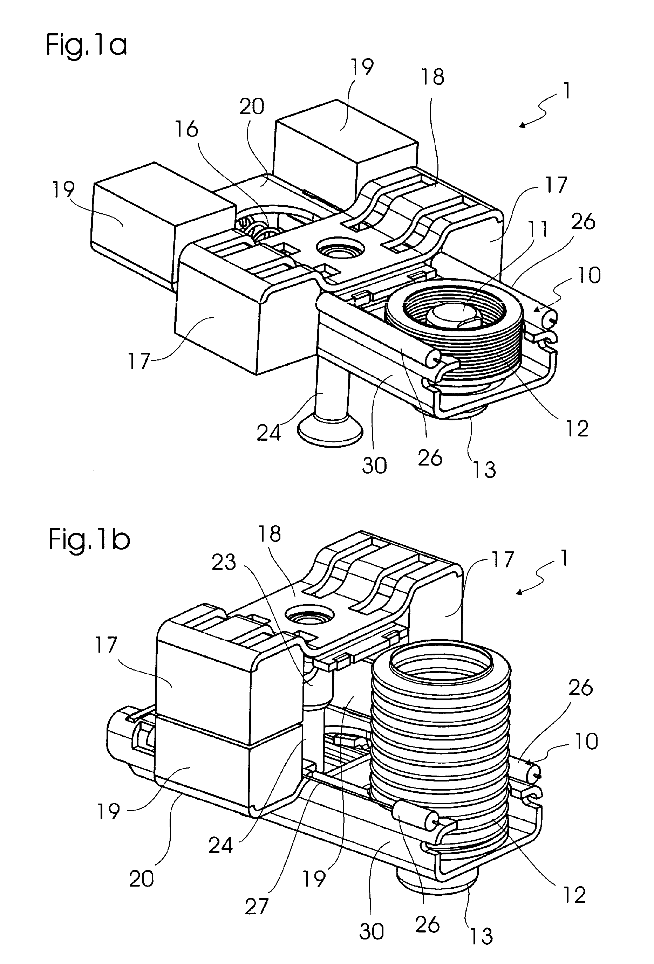

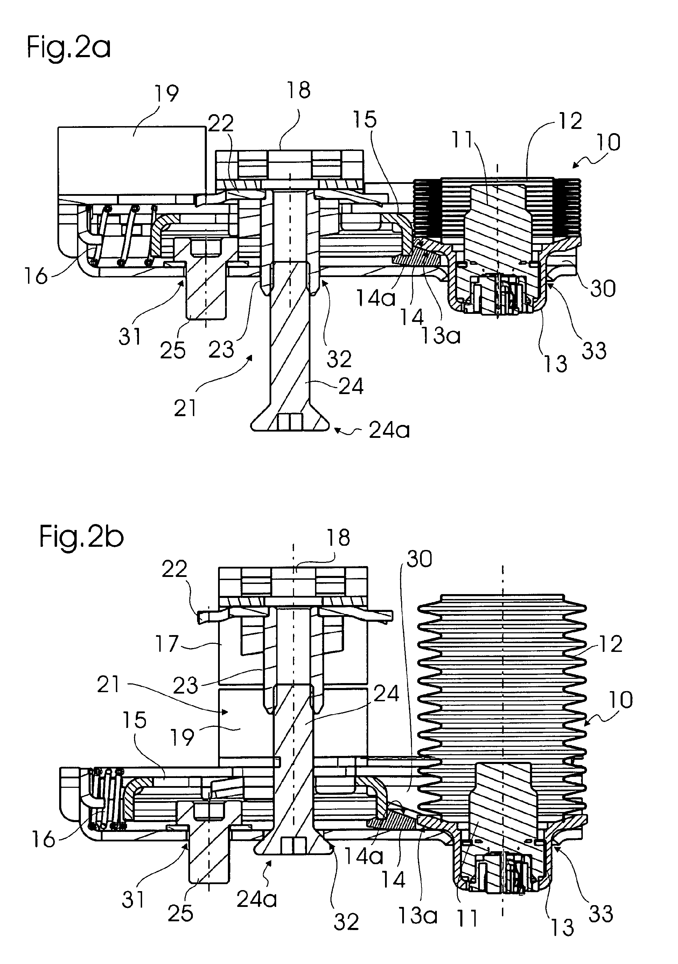

Die Figuren 1a sowie 2a zeigen ein erfindungsgemäßes Sicherheitssystem 1 für einen Pkw in einer Ruheposition, also beim normalen Betrieb des Fahrzeugs. Das Sicherheitssystem 1 bildet hierbei einen Sitzaufsteller, d. h. es ist dazu vorgesehen, in einer Notfallsituation einen (nicht dargestellten) Fahrzeugsitz bzw. eine Seite desselben anzuheben. Im letzteren Fall wird der Fahrzeugsitz gekippt. Ein Anheben der rechten oder linken Seite des Sitzes führt zu einer seitlichen Kippbewegung, was z. B. dazu dienen kann, eine für den Insassen bessere Einfassung in den Sitz bei einem Seitenaufprall zu erreichen. Daneben ist insbesondere bei einem Heckaufprall ein Anheben der hinteren Seite vorteilhaft, wodurch der Sitz insgesamt nach vorne gekippt wird. Dies wird weiter unten noch erläutert.

Das Sicherheitssystem 1 weist ein Schienenelement 30 mit einem im wesentlichen U-förmigen Profil auf, welches eine Art Rahmen für weitere Komponenten bildet. An der Basis des Schienenelements 30 sind eine erste Bohrung 31, eine zweite Bohrung 32 sowie eine Ausnehmung 33 angeordnet. Hierbei dient die erste Bohrung 31 zur Aufnahme einer Schraube 25, mittels derer das Schienenelement 30 an einem (hier nicht dargestellten) Fahrzeugboden gesichert wird. Durch die zweite Bohrung 32 ist eine Gewindehülse 23 einer Anschlagbaugruppe 21 geführt. Die Anschlagbaugruppe 21 umfasst des Weiteren eine - bezogen auf die Einbauposition - unterseitig in die Gewindehülse 23 eingeschraubte Anschlagschraube 24 sowie einen am entgegengesetzten Ende mit der Gewindehülse 23 verbundenen Halteschuh 22. Auf diesem Halteschuh 22 ist ein noch zu erläuternder erster Dämpferhalter 18 angeordnet, auf dem im eingebauten Zustand eine (hier nicht dargestellte) Bodenschiene für einen Fahrzeugsitz angeordnet ist. Diese wird mittels einer durch eine Öffnung des ersten Dämpferhalters 18 hindurchgeführten Schraube, die in das Innengewinde der Gewindehülse 23 eingeschraubt wird, mit der Anschlagbaugruppe 21 verbunden.

Das Sicherheitssystem 1 umfasst einen Antrieb 10, der einen Wellbalg 12 sowie einen Mikrogasgenerator 11 umfasst. Sowohl der Mikrogasgenerator 11 als auch der Wellbalg 12 haben vorliegend eine grob zylindrische Form. Der Mikrogasgenerator 11 ist in einem Halteelement 13 aufgenommen, das an einer Stirnseite des Wellbalgs 12 fest mit diesem verbunden ist. In etwa die obere Hälfte des Mikrogasgenerators 11 ist hierbei innerhalb des Wellbalgs 12 angeordnet, wodurch der gesamte Antrieb 10 eine sehr kompakte Bauweise aufweist. Die vom Halteelement 13 abgewandte Stirnseite des Wellbalgs 12 liegt im eingebauten Zustand an der Unterseite der Bodenschiene an. In einem Randbereich des Halteelements 13 weist dieses eine erste Schräge 13a auf. Die erste Schräge 13a wirkt mit einer zweiten Schräge 14a an einem Gleitkeil 14 zusammen. Dieser Gleitkeil 14 ist hierbei zwischen dem Halteelement 13 und dem Boden des Schienenelements 30 angeordnet und mit einem Verriegelungsschlitten 15 verbunden, der verschiebbar innerhalb des Schienenelements 30 angeordnet ist. Durch eine hier nicht näher dargestellte Verzahnung greift der Verriegelungsschlitten 15 formschlüssig mit dem Halteschuh 22 zusammen, wodurch eine Verschiebung der Anschlagbaugruppe 21 in senkrechter Richtung verhindert wird. Der Verriegelungsschlitten 15 ist auf einer dem Antrieb 10 abgewandten Seite durch eine Druckfeder 16 beaufschlagt. In der Darstellung gemäß Fig.1a und Fig.1b ist die obere Stirnseite des Wellbalgs 12 offen, da die Bodenschiene nicht dargestellt ist. In eingebautem Zustand ist durch die Bodenschiene (oder ein zwischengeschaltetes Bauteil) in diesem Bereich ein weitgehend gasdichter Abschluss gegeben, wobei kleinere Austrittsöffnungen für einen langsamen Druckabbau vorgesehen sein können.

Wie insbesondere aus Fig.1a ersichtlich ist, sind mit dem ersten Dämpferhalter 18 zwei erste Dämpfungselemente 17 aus Aluminiumschaum verbunden, die beiderseits des Schienenelements angeordnet sind. Des Weiteren sind zwei zweite Dämpfungselemente 19 vorgesehen, die entsprechend durch einen zweiten Dämpferhalter 20 miteinander verbunden sind. Der zweite Dämpferhalter 20 ist in Längsrichtung verschiebbar am Schienenelement 30 angeordnet und über zwei Zugstangen 27 mit zwei vorgespannten Federpaketen 26 verbunden, die eine Zugkraft auf ihn ausüben. In der in Fig.1a und Fig.2a dargestellten Ruheposition ist eine Verschiebung des zweiten Dämpferhalters 20 sowie der zweiten Dämpfungselemente 19 dadurch verhindert, dass diese durch die ersten Dämpfungselemente 17 blockiert wird.

Wird in einer Notfallsituation der Mikrogasgenerator 11 aktiviert, so wird der Wellbalg 12 innenseitig mit Gasdruck beaufschlagt. Eine vom Mikrogasgenerator 11 weg gerichtete Expansion des Wellbalgs 12 wird zunächst dadurch verhindert, dass er an der entsprechenden Stirnseite mit der Bodenschiene verbunden ist, die über die Gewindehülse 23 und den Halteschuh 22 durch den Verriegelungsschlitten 15 gesichert ist. Allerdings kann der Wellbalg 12 in entgegengesetzter Richtung expandieren, wobei das Halteelement 13 durch die Ausnehmung 33 geschoben wird, während durch das Zusammenwirken der ersten und zweiten Schräge 13a, 14a der Gleitkeil 14 sowie der hiermit verbundene Verriegelungsschlitten 15 entgegen der Kraft der Druckfeder 16 in Längsrichtung des Schienenelements 30 vom Antrieb 10 weg geschoben werden. Hierdurch wird die Verriegelung zwischen Verriegelungsschlitten 15 und Halteschuh 22 gelöst. Entsprechend expandiert nunmehr der Wellbalg 12 nach oben, wobei er die Bodenschiene vom Fahrzeugboden weg drückt. Wie aus dem Vergleich von Fig.2a und Fig.2b ersichtlich ist, expandiert der Wellbalg 12 in etwa auf das Dreifache seiner ursprünglichen Länge.

Entsprechend der Bewegung des Wellbalgs 12 wird die gesamte Anschlagbaugruppe 21 sowie der erste Dämpferhalter 18 mit den daran befindlichen ersten Dämpfungselementen 17 nach oben verschoben. Diese Bewegung endet, wenn ein Kopf 24a der Anschlagschraube 24 mit der zweiten Bohrung 32 zusammentrifft und dort eine weitere Verschiebung blockiert. Hierdurch wird ein maximaler Bewegungsumfang der Bodenschiene sowie des Antriebs 10 festgelegt. Die ersten und zweiten Dämpfungselemente 17, 19 sind so dimensioniert, dass kurz bevor der Kopf 24a mit der zweiten Bohrung 32 zusammentrifft, die ersten Dämpfungselemente 17 die Bewegung der zweiten Dämpfungselemente 19 freigeben, so dass diese durch die Federpakete 26 mittels der Zugstangen 27 entlang des Schienenelements 30 gezogen werden, bis sie sich unterhalb der ersten Dämpfungselemente 17 befinden. Dieser Zustand ist in Fig.1b und Fig.2b dargestellt. Durch das Übereinanderliegen der Dämpfungselemente 17, 19 ergibt sich bezogen auf die Bewegungsrichtung des Antriebs 10 sowie der Bodenschiene eine verlängerte Wegstrecke, entlang derer eine Dämpfung stattfinden kann.

Eine möglich Funktionsweise des dargestellten Sicherheitssystems 1 besteht darin, dass in einer Notfallsituation, z. B. bei einem Auffahrunfall, ein hinterer Teil einer Bodenschiene, an dem der Antrieb 10 angeordnet ist, gegenüber dem Fahrzeugboden angehoben wird, während ein vorderer Teil der Bodenschiene dicht am Fahrzeugboden angeordnet bleibt. Hierdurch ergibt sich also insgesamt eine Kippbewegung der Bodenschiene, die in einer Kippbewegung des daran angeordneten Fahrzeugsitzes resultiert. Aufgrund der Schrägstellung der Bodenschiene befindet sich hierbei ggf. die Oberseite des ersten Dämpferhalters 18 etwas niedriger als die obere Stirnseite des Wellbalgs 12 bzw. umgekehrt, je nach Orientierung des Sicherheitssystems 1 gegenüber der Bodenschiene. Dieser Unterschied kann jedoch z. B. bei Kippwinkeln von etwa 5° gering sein und ist daher in Fig. 2b vereinfachend nicht dargestellt. Durch die Kippbewegung erfolgt insgesamt auch eine Bewegung der Rückenlehne sowie der daran angeordneten Kopfstütze relativ zum restlichen Fahrzeug. Da die genannten Bewegungen sehr kurzzeitig (z. B. innerhalb weniger Millisekunden) erfolgen, bleibt ein auf dem Fahrzeugsitz befindlicher Insasse während dieser Zeit im Wesentlichen in Position. Daher wird ein oberer Teil der Rückenlehne sowie die daran angeordneten Kopfstütze näher an den oberen Rückenbereich und Kopf des Insassen gerückt, um eine verbesserte Abstützung dort zu erreichen. Durch die beim Unfall auftretenden Beschleunigungen wird der Insasse gegen die Rückenlehne gedrückt, wodurch sich insgesamt ein Drehmoment ergibt, dass die Bodenschiene wieder zurück in Richtung der Ausgangsposition bewegt. Diese Rückbewegung wird allerdings durch die aufgestellten Dämpfungselemente 17, 19 gebremst, die hierbei einen Großteil an Energie aufnehmen, was einem zusätzlichen Schutz des Insassen dient.

### Bezugszeichenliste

- 1: Sicherheitssystem
- 10: Antrieb
- 11: Mikrogasgenerator
- 12: Wellbalg
- 13: Halteelement
- 13a: erste Schräge
- 14: Gleitkeil
- 14a: zweite Schräge
- 15: Verriegelungsschlitten
- 16: Druckfeder
- 17: erstes Dämpfungselement
- 18: erster Dämpferhalter
- 19: zweites Dämpfungselement
- 20: zweiter Dämpferhalter
- 21: Anschlagbaugruppe
- 22: Halteschuh
- 23: Gewindehülse
- 24: Anschlagschraube
- 24a: Kopf
- 25: Schraube
- 26: Federpaket
- 27: Zugstange
- 30: Schienenelement
- 31: erste Bohrung
- 32: zweite Bohrung
- 33: Ausnehmung

## Patentansprüche

1. Sicherheitssystem (1) für ein Fahrzeug, mit einem Antrieb (10) zur Einwirkung auf eine Fahrzeugkomponente, wobei der Antrieb (10)
- einen pyrotechnischen Gasgenerator (11), sowie
- einen Wellbalg (12)
umfasst, wobei durch Druckbeaufschlagung mittels des Gasgenerators (11) eine Expansion des Wellbalgs (12) auslösbar ist.

2. Sicherheitssystem nach Anspruch 1, **dadurch gekennzeichnet, dass** der pyrotechnische Gasgenerator (11) wenigstens teilweise innerhalb des Wellbalgs (12) angeordnet ist.

3. Sicherheitssystem nach einem der vorherigen Ansprüche, **dadurch gekennzeichnet, dass** der Gasgenerator (11) an einem Halteelement (13) an einer Stirnseite des Wellbalgs (12) angeordnet ist.

4. Sicherheitssystem nach einem der vorherigen Ansprüche, **gekennzeichnet durch** ein Arretierungselement (15) zur wenigstens teilweisen Lagesicherung des Antriebs (10) und/oder der Fahrzeugkomponente.

5. Sicherheitssystem nach Anspruch 4, **dadurch gekennzeichnet, dass** das Arretierungselement (15) durch Einwirkung des Antriebs (10) lösbar ist.

6. Sicherheitssystem nach Anspruch 5, **gekennzeichnet durch** ein Paar von Schrägen (12a, 14a), **durch** welche das Arretierungselement (15) **durch** den Antrieb (10) kraftbeaufschlagbar ist, um das Arretierungselement (15) quer zu einer Expansionsrichtung des Wellbalgs (12) zu verschieben.

7. Sicherheitssystem nach Anspruch 6, **dadurch gekennzeichnet, dass** eine der Schrägen (13a) an dem Halteelement (13) ausgebildet ist.

8. Sicherheitssystem nach einem der vorherigen Ansprüche, **dadurch gekennzeichnet, dass** die Fahrzeugkomponente ein Fahrzeugsitz, eine Fahrzeugsitzschiene und/oder eine Komponente hiervon ist.

9. Sicherheitssystem nach einem der vorherigen Ansprüche, **gekennzeichnet durch** wenigstens ein Dämpfungselement (17, 19) zur Dämpfung einer Rückbewegung, die einer Antriebsbewegung entgegengesetzt ist.

10. Sicherheitssystem nach Anspruch 9, **dadurch gekennzeichnet, dass** das wenigstens eine Dämpfungselement (17, 19) durch Einwirkung des Antriebs (10) aktivierbar ist.

11. Sicherheitssystem nach Anspruch 9 oder 10, **dadurch gekennzeichnet, dass** zur Aktivierung die Anordnung zweier Dämpfungselemente (17, 19) relativ zueinander veränderbar ist, um eine Wegstrecke zu vergrößern, entlang der eine Dämpfung gegeben ist.

12. Sicherheitssystem nach einem der vorherigen Ansprüche, **gekennzeichnet durch** einen verstellbares Anschlagelement (25) zur Festlegung eines Bewegungsumfangs des Antriebs (10) und/oder der Fahrzeugkomponente.

13. Antrieb (10) für ein Sicherheitssystem nach einem der Ansprüche 1 bis 12, umfassend
- einen pyrotechnischen Gasgenerator (11), sowie
- einen Wellbalg (12),
wobei durch Druckbeaufschlagung mittels des Gasgenerators (11) eine Expansion des Wellbalgs (12) auslösbar ist.
